Europäisches Patentamt

European Patent Office

Office européen des brevets

(11) Publication number: **0 077 891**
**B1**

# EUROPEAN PATENT SPECIFICATION

(45) Date of publication of patent specification: **19.08.87**

(21) Application number: **82107222.0**

(22) Date of filing: **10.08.82**

(51) Int. Cl.⁴: **G 06 F 15/20**

(54) **System for formatting justified lines of text containing complex characters.**

(30) Priority: **26.10.81 US 315029**

(43) Date of publication of application:
**04.05.83 Bulletin 83/18**

(45) Publication of the grant of the patent:
**19.08.87 Bulletin 87/34**

(84) Designated Contracting States:
**BE CH DE FR GB IT LI NL**

(56) References cited:
**US-A-3 312 953**
**US-A-3 690 231**

**IBM TECHNICAL DISCLOSURE BULLETIN, vol.
9, no. 11, April 1967, page 1578, New York, US;
R.S. HEARD et al.: "Text composition with
numerous accents"**

(73) Proprietor: **International Business Machines
Corporation
Old Orchard Road
Armonk, N.Y. 10504 (US)**

(72) Inventor: **Daniels, Paul Richard
1001 Brushy Creek Dr.
Round Rock Texas 78664 (US)**

(74) Representative: **Bonin, Jean-Jacques
Compagnie IBM France Département de
Propriété Intellectuelle
F-06610 La Gaude (FR)**

## Description

This invention relates to text or word processing systems, i.e., information processing systems where the processing affects the format of the information. More particularly, it relates to a method for justifying a line of text containing complex characters formed from backspace and overstrikes.

Word or text processing systems have been developed for formatting alphanumeric data into a suitable format for specified printed documents, e.g., letters, reports, text books, magazines and newspapers. In previous word processing systems, substantially all of the formatting was accomplished in the word processor. A word processor normally comprises a keyboard entry display terminal, storage means, and a central processor. The operator utilizing the display terminal arranges the information into a preselected alphanumeric line and page format. The system then transmits the alphanumeric data, together with the formatting data, to the printer for outputting the previously formatted document. More recent word or text processing systems have sought new approaches to increase the output of the system. Improved word processing systems have included formatting capability in the printer so that the word processor would be released to carry out further word or text processing activities as the foreground task, while the printer could function simultaneously to complete its formatting functions as a background task.

Formatters in printers associated with word or text processors basically convert an input data stream containing controls and EBCDIC characters into an output data stream containing escape, print, and index commands. The formatter performs its task by operating on the input data stream in two passes, the scan pass and format pass. In the scan pass, a line of text from the input data stream is preprocessed through the calculation and storage of certain parameter values for later use in the format pass. In the output pass, printer control commands are generated from the line of text for buffering and subsequent transmission to the printer control system.

One of the functions performed by the text formatter of a printer is justification, or the uniform expansion of interword spaces for the purpose of eliminating all or some other specified percentage of the blank space between the rightmost graphic in a field and the right boundary of the field. The calculations necessary to perform the justification process are made during the scan pass and stored until the format pass where the space expansion process is performed. The basic functions performed during the justification process are as follows: determining the number of expandable spaces in a field, calculating the amount of blank space to be eliminated, determining which spaces are to be expanded, and adding an appropriate escapement value to the escapement of the expandable spaces.

The printer of a text or word processing system forms a complex character in two passes of the printhead. In the first pass, the line or a section of the line is printed, then the printer is backspaced and the complex character is formed by overstrikes, such as by underlining or accent marks added to the printed character. However, such complex characters formed in two passes of a printhead have presented a problem with respect to line justification. Since line justification involves varying the interword space, any conventional justification technique would present a problem involving an interword space which was backspaced across in order to form the complex character. The result of ordinary line justification would be an offset between the character printed in the first pass and the overstrike printed in the second pass. A need has thus arisen for a line justification technique for use in combination with the formation of complex characters formed from two passes of the printhead.

The present invention provides for a method for formatting a line of text containing complex characters in a printer where the printing of complex characters requires printing a portion of said complex character during a first pass, then backspacing and completing the printing of said complex character during a second pass, comprising the steps of

(a) scanning the input data representing a line of text to be printed,

(b) establishing a count of spaces available for subsequent justification of said line of text, and storing that count,

(c) determining the occurrence of each interword space of said line of text,

(d) storing the location and length of each interword space determined in step (c) in a storage mechanism,

(e) incrementing said count of spaces by the length of each of those interword spaces determined in step (c),

(f) determining the occurrence of each backspace,

(g) determining those interword spaces which overlap at least partially a backspace,

(h) deleting from said storage mechanism the location and length of each of those interword spaces determined in step (g),

(i) decrementing said count of spaces by the length of each of those interword spaces determined in step (g), and

(j) considering only those interword spaces which remain in said count of spaces and said storage mechanism for the calculation of space expansion values and for determination of spaces to be expanded, and justifying said line of text accordingly.

In the attached drawings:

Figure 1 is a diagrammatic representation of the logic and apparatus which may be used to carry out the line justification formatting of the present invention;

Figure 2 is a drawing of the space image storage data structure;

Figure 3 is a flow chart diagram of the line scan process; and

Figure 4 is a flow chart diagram of the line format process.

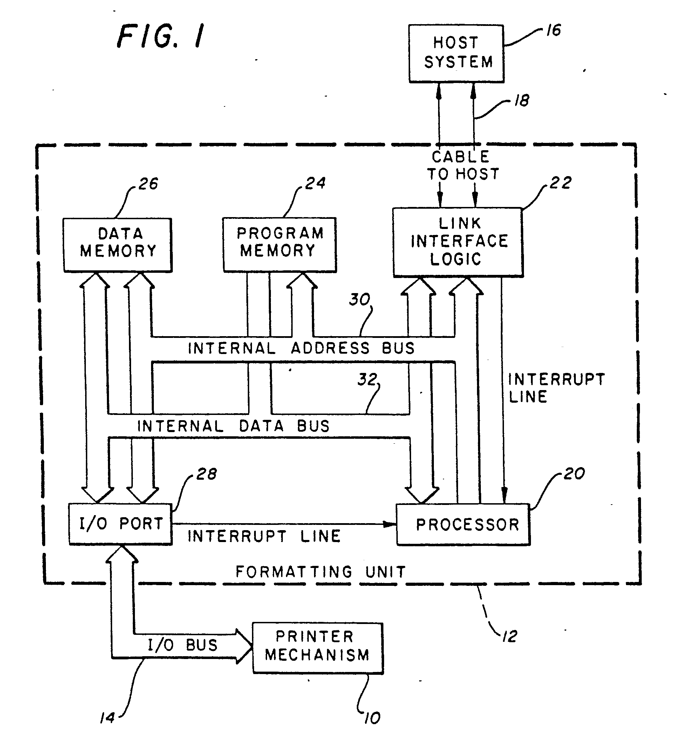

Referring to Figure 1, a block diagram of a word or text processing system implementing the present invention is illustrated. The system includes a printer mechanism 10 which may be implemented by any conventional impact printer used in connection with word or text processing systems. The system also includes a formatting capability carried out in a formatting unit 12 connected to the printer 10 through an input/output bus 14. The formatting unit 12 is capable of carrying out the line justification function, as well as other formatting functions such as margin release and the setting of designated units for tabbing.

The formatting unit 12 is connected to a host system 16 over a cable 18. The host system 16 may be any standard word or text processing system, preferably one having a keyboard entry display. A typical word or text processing system which may be used is described in the European Patent Application No. 82103940.1 filed on May 6, 1982 and published as EP—A—0067303 on 22.12.82. The formatting unit 12 enables the host system 16 to be freed from performing simple formatting functions, thereby permitting the whole system to carry out other functions more efficiently. The data transmitted over the cable 18 from host system 16 to the formatting unit 12 represents text character data to be printed on the printer mechanism 10 as a document in which data is already substantially formatted. The formatting unit 12 performs the additional formatting functions and transmits the final formatted information to the printer mechanism 10 over the input/output bus 14. The final formatted information will be utilized to control the printer 10 to produce the final document in the conventional manner.

The formatting unit 12 includes a digital signal processor 20 which may be implemented by a microprocessor controlling all of the operations carried out within the formatting unit 12. The formatting unit 12 also contains a data link interface logic unit 22 which functions as the interface between the host system 16 and the formatting unit 12. A program memory unit 24 stores the operational programs utilized by the processor 20 in carrying out the various formatting functions. A data memory unit 26 stores the formatted data, including that provided by the host system 16 as well as that provided by the formatting unit 12. An input/output port unit 28 operates in a conventional manner to serve as the interface between the formatting unit 12 and the printer mechanism 10. The processor 20, link interface logic unit 22, program memory unit 24, data memory unit 26 and input/output port 28 of the formatting unit 12 are interconnected by an internal address bus 30 and an internal data bus 32.

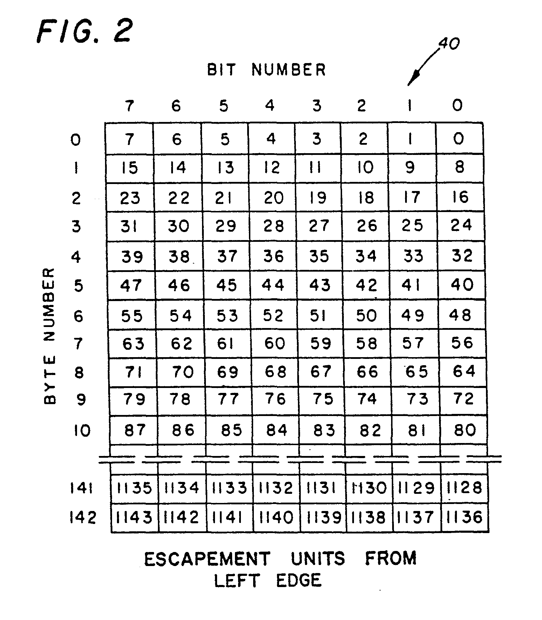

Referring now to Figure 2, a space storage mechanism 40 is constructed in memory with each bit in each byte corresponding to a location on the presentation surface which is a multiple of one escapement unit. The data structure of the storage mechanism 40 uses consecutive bytes of RAM memory with each byte accommodating eight escapement units of horizontal displacement. The low order bit (bit 0) of the lower order byte (byte 0) represents the left edge of the presentation surface. Each higher order bit in the data structure represents a displacement of one escapement unit to the right on the presentation surface, where bit 0 of byte N + 1 is considered the next higher order bit compared to bit 7 of byte N. The numbers of the squares inside the space storage mechanism 40 represent the number of escapement units from the left edge represented by that bit and byte number. For example, byte 2, bit 7 represents a horizontal position on the presentation surface, 23 escapement units from the left edge, and the next horizontal position to the right, 24 escapement units from the left edge, is represented by byte 3, bit 0.

A space in the input data stream is encoded in the storage mechanism 40 as a sequence of consecutive bits in ascending bit/byte order where the low order bit has a value of zero and the remaining bits have a value of one. The number of consecutive bits in sequence is a function of the number of escapement units comprising a space. As an example, the encoding method allows for spaces with four, five, or six escapement units corresponding to fifteen, twelve, and ten pitch character fonts. If the printer format utilizes a fifteen pitch character font, the space image is encoded in the storage data mechanism as four consecutive bits, a zero bit followed by three bits having the value of one. The location of the first zero valued bit corresponds to the horizontal position of the left edge of the space. The encoding of the left-most edge of the space provides a means for distinguishing between two or more consecutive spaces and a single long space. The absence of space in any position is indicated by a sequence of two or more consecutive zero valued bits. Accordingly, if there are no space images in a line of input data, all bits in the space storage mechanism 40 would be set to zero. To illustrate the encoding of a space image in the space storage mechanism 40, a five escapement unit wide space located fourteen escapement units from the left edge would be encoded by placing a zero value in byte 1, bit 6 and ones in byte 1, bit 7 and byte 2, bits 0, 1 and 2.

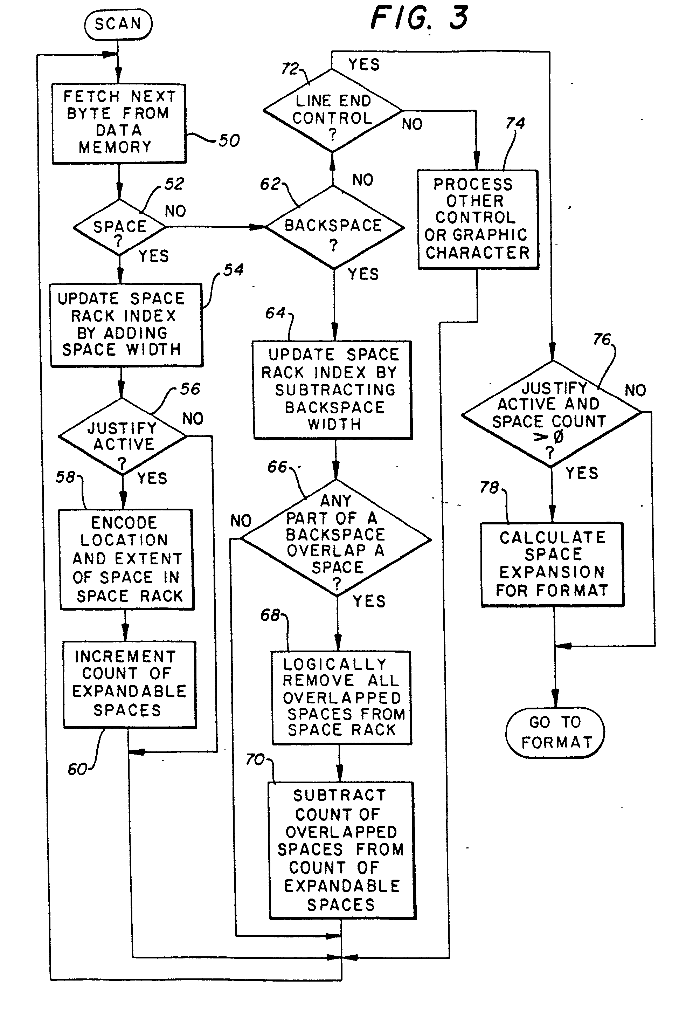

Referring now to Figure 3, a flow chart illustrates the processing of an input stream of data during a scan pass. The scan subroutine first executes an instruction 50 to fetch the next byte from the data memory. The routine advances to inquiry 52 to determine if the byte represents a space. If a space is represented, the routine advances to step 54 to update the space rack index by adding the space width. The space rack index serves as a pointer into the space storage mechanism 40. The space width may vary with proportional spacing and midline pitch changes, e.g., three, four, or five escapement units. The routine then advances to inquiry 56 to determine if the justification feature is active. If the justification feature is determined to be active, the subroutine advances to step 58 to encode the location and extent of the space in the space rack, the space storage mechanism 40.

The routine then advances to step 60 to increment the count of expandable spaces for the justification process. The routine then returns to the initial instruction 50 to fetch the next byte from the data memory. If the inquiry 56 determines that justification is not active, the subroutine branches around steps 58 and 60, returning to instruction 50 to fetch the next byte from data memory.

If the scan routine at inquiry 52 determines that the next byte of data is not a space, it advances to inquiry 62 to determine if it is a backspace. If the byte is a backspace, the routine advances to instruction 64 to update the space rack index by subtracting the backspace width. The routine then advances to inquiry 66 to determine if any part of a backspace overlaps a space. If a backspace does not overlap a space, the routine branches to step 50 to fetch the next byte from data memory. However, if all or any part of a backspace overlaps a space, the routine advances to step 68 to logically remove all overlapped spaces from the space rack. The routine then advances to step 70 to subtract the count of overlapped spaces from the count of expandable spaces, and the routine is returned to step 50 to fetch the next byte of data.

If the backspace inquiry 62 determines that the byte from the data memory is not a backspace, the routine advances to inquiry 72 to determine if it represents a line end control. If it does not represent a line end control, the routine branches to step 74 to process other control or graphic character and returns the routine to fetch the next data from memory at instruction 50. If inquiry 72 indicates the data indicates a line end control, the routine branches to inquiry 76 to determine if the justification format feature is active and the space count is greater than zero. If both these conditions are met, the inquiry advances to program step 78 to calculate the space expansion for format, returning the program to the format routine following completion of the calculation. If the inquiry 66 determines that justification is not active or the space count is not greater than zero, then the routine branches to the format subroutine.

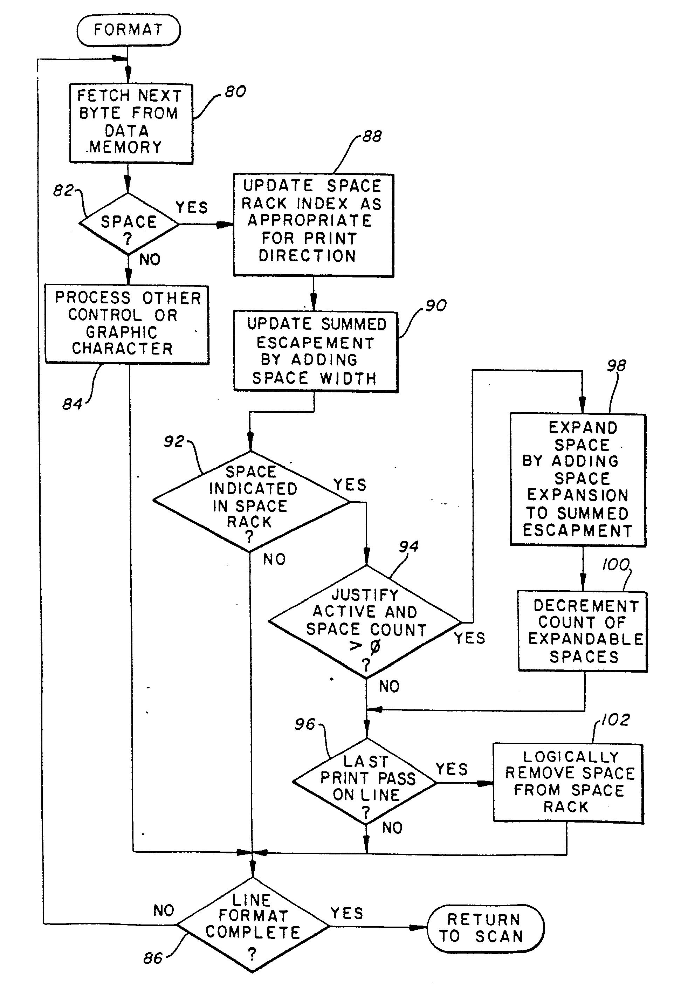

Referring now to Figure 4, the format subroutine is illustrated as a flow chart diagram. In the first step 80 of the routine an instruction is executed to fetch the next byte of data from memory. The routine then advances to inquiry 82 to determine if the data represents a space. If the byte of data does not represent a space, the routine advances to instruction 84 to process other control or graphic character. Following the processing of other control or graphic data, the program advances to inquiry 86 to determine if the line format is complete. If the line format is completed the program returns control to the scan routine, Figure 3. If it is not complete, it returns to instruction 80 to fetch the next byte from data memory.

If the space inquiry 82 determines that the byte of data represents a space, it advances to instruction 88 to update the space rack index as appropriate for the print direction. The format routine then advances to instruction 90 to update the summed escapement by adding the space width. The routine advances to inquiry 92 to determine if the space is indicated in the space rack. If no space is indicated in the space rack, the routine advances to the line format complete inquiry 86. However, if a space is indicated in the space rack, the routine advances from inquiry 92 to inquiry 94 to determine if the justification format feature is active and the space count is greater than zero. If inquiry 94 is negative, the routine advances to a next inquiry 96 to determine if it is the last print pass on the line. If it is not the last print pass, the routine advances to inquiry 86 to determine if the line format is complete.

If the inquiry 84 determines that both the justification feature is active and the space count is greater than zero, the routine advances to execute instruction 98 to expand the space by adding the space expansion to the summed escapement. The routine executes instruction 100 to decrement the count of expandable spaces. The routine then returns to inquiry 96. If inquiry 96 indicates that it is the last print pass on the line, it advances to instruction 102 to logically remove the space from the space rack.

In operation, a line of text from the input data is pre-processed by the formatting unit 12 for later use in the format pass, where the line of text is converted into printer control commands. The printer control commands are buffered for subsequent transmission to the printer mechanism 10.

When an interword space is encountered in the input data stream in the scan pass, the location and extent of the space is encoded in the space storage mechanism 40. The stored location is the horizontal position where the space would lie along the print line without justification active. The extent of the space in storage would depend upon the pitch and could typically be four, five, or six escapement units.

When a backspace is encountered during the scan of input data, the space storage mechanism 40 is examined at locations corresponding to the horizontal positions of the backspace to determine if any portion of a space lies within the extent of the backspace. If any spaces lie within the extent of the backspace, the expandable space count for justification is decreased and the overlapped space images are deleted from the storage mechanism 40.

When a space is encountered in the format pass, the storage mechanism 40 is again examined. If the storage mechanism location corresponding to the print position if justification not active contains a space, the space is expanded as determined in the calculation in the scan pass (Figure 3, step 78 of the scan routine). Upon reaching the last print pass on a line, all space images are removed from storage mechanism 40 so that it will not interfere with justification of the next line of text.

## Claims

1. Method for formatting a line of text containing complex characters in a printer where the printing of complex characters requires printing a portion of said complex character during a first pass, then backspacing and completing the printing of said complex character during a second pass, comprising the steps of

(a) scanning the input data representing a line of text to be printed,

(b) establishing a count of spaces available for subsequent justification of said line of text, and storing that count,

(c) determining (52) the occurrence of each interword space of said line of text,

(d) storing (58) the location and length of each interword space determined in step (c) in a storage mechanism (40),

(e) incrementing (60) said count of spaces by the length of each of those interword spaces determined in step (c),

(f) determining (62) the occurrence of each backspace,

(g) determining (66) those interword spaces which overlap at least partially a backspace,

(h) deleting (68) from said storage mechanism the location and length of each of those interword spaces determined in step (g),

(i) decrementing (70) said count of spaces by the length of each of those interword spaces determined in step (g), and

(j) considering only those interword spaces which remain in said count of spaces and said storage mechanism for the calculation (78) of space expansion values and for determination of spaces to be expanded, and justifying said line of text accordingly.

2. Method according to claim 1, characterized in that it further comprises the steps of

(k) establishing an index to be used as a pointer for said storage mechanism,

(l) incrementing (54) said index by the space length of each of those interword spaces determined in step (c), and

(m) decrementing (64) said index by the space length of each of those interword spaces determined in step (g).

3. Method according to Claims 1 or 2 characterized in that said interword spaces are encoded for storage purpose to accommodate varying length widths occurring in said data, whereby variations in character pitch occurring in a line of data to be printed may be properly formatted for justification.

4. Method according to Claims 1, 2 or 3 characterized in that:

said storage mechanism (40) is a random access memory having each bit in each byte corresponding to one escapement unit along the print line, the lowest bit of byte N + 1 being a higher order bit compared to the highest bit of byte N, and

said interword spaces are encoded in said memory as a sequence of consecutive bits in ascending bit/byte order.

## Patentansprüche

1. Methode zum Formatieren einer Textlinie mit komplexen Zeichen in einem Drucker, wobei das Drucken der komplexen Zeichen in einer ersten Phase das Drucken eines Teiles dieser komplexen Zeichen erfordert, wonach der Drucker zurückfährt und in einer zweiten Phase das komplexe Zeichen vervollständigt, wozu folgende Schritte durchgeführt werden:

(a) Abgreifen von Eingabedaten, die eine Zeile des zu druckenden Textes darstellen,

(b) Erstellung einer Zählung des verfügbaren Stellenraumes für den nachfolgenden Randausgleich der genannten Textzeile und Einspeichern dieser Zählung,

(c) Bestimmung (52) des Auftretens aller Zwischenwortabstände in der genannten Textzeile,

(d) Einspeichern (58) von Lage und Länge aller im Schritt (c) erkannten Zwischenwortabstände in einer Einlagervorrichtung (40),

(e) Inkrementieren (60) der genannten Stellenzählung um die Länge der im Schritt (c) bestimmten Zwischenwortabstände,

(f) Festlegen (62) des Auftretens aller Rückwärtsschritte,

(g) Festlegen (66) derjenigen Zwischenwortabstände, die zumindest teilweise einen Rückwärtsschritt überdecken,

(h) Auslöchen (68) aus der genannten Einlagerungsvorrichtung der Lage und der Länge aller der im Schritt (g) bestimmten Zwischenwortabstände,

(i) Dekrementieren (70) der genannten Stellenzählung um die jeweilige Länge der im Schritt (g) bestimmten Zwischenwortabstände, und

(j) alleinige Inbetrachtnahme der Zwischenwortabstände, die in der genannten Stellenzählung sowie in der genannten Einlagervorrichtung verbleiben, um die Berechnung (78) der Stellenraumerweiterungswerte und die Bestimmung des zu erweiternden Stellenraumes sowie den Randausgleich der genannten Textzeile dementsprechend durchzuführen.

2. Methode nach Anspruch 2, dadurch gekennzeichnet, dass sie weiterhin folgende Schritte aufweist:

(k) Erstellen eines Indexes, der als Pointer für die genannte Einlagervorrichtung gebraucht werden soll,

(l) Inkrementieren (54) des genannten Indexes um die Stellenlänge der jeweiligen, im Schritt (c) bestimmten Zwischenwortabstände, und

(m) Dekrementieren (64) des genannten Indexes um die Stellenlänge der jeweiligen, im Schritt (g) bestimmten Zwischenwortabstände.

3. Methode nach Anspruch 1 oder 2, dadurch gekennzeichnet, dass die genannten Zwischenwortabstände zu Einlesezwecken codiert sind, um veränderliche Längsweiten aufnehmen zu können, die in den genannten Daten vorkommen, wobei Schwankungen des Zeichenabstandes, die in der zu druckenden Datenzeile vorkommen, für den Randausgleich richtig formatiert werden.

4. Methode nach Anspruch 1, 2 oder 3, dadurch gekennzeichnet, dass:

es sich bei der genannten Einlagervorrichtung (40) um einen Direktzugriffspeicher handelt, bei dem jedes Bit in jedem Byte einer Vorschubeinheit längs der Druckzeile entspricht, wobei das niedrigstwertige Bit des Bytes N + 1 ein höherwertiges Bit als das höchstwertige Bit im Byte N ist, und

alle genannten Zwischenwortabstände im genannten Speicher als eine Reihe aufeinanderfolgender Bits in steigender Bit/Byte-Wertigkeit codiert werden.

**Revendications**

1. Méthode de mise au format d'une ligne de texte contenant des caractères complexes dans un imprimante où l'impression de caractères complexes requiert l'impression d'une partie dudit caractère complexe pendant un premier passage, puis un retour en arrière et l'achèvement de l'impression dudit caractère complexe pendant un second passage, comprenant les étapes suivantes:

(a) La balayage des données d'entrée représentant une ligne de texte à imprimer.

(b) L'établissement d'un compte d'espaces disponibles pour une justification extérieure de ladite ligne de texte et l'emmagasinage de ce compte.

(c) La détermination (52) de l'apparition de chaque espace inter-mot de ladite ligne de texte.

(d) L'emmagasinage (58) de l'emplacement et de la longueur de chaque espace inter-mot déterminé à l'étape (c) dans un mécanisme d'emmagasinage (40).

(e) L'incrémentation (60) dudit compte d'espaces par la longueur de chacun desdits espaces inter-mots déterminés à l'étape (c).

(f) La détermination de chaque espacement arrière.

(g) La détermination (66) desdits espaces inter-mots qui chevauchent au moins partiellement un espacement arrière.

(h) La suppression (68) dudit mécanisme d'emmagasinage de l'emplacement et de la longueur de chacun desdits espaces inter-mots déterminés à l'étape (g).

(i) La décrémentation (70) dudit compte d'espaces par la longueur de chacun desdits espaces inter-mots déterminés à l'étape (g), et

(j) La seule considération des espaces inter-mots qui restent dans ledit compte d'espaces et ledit mécanisme d'emmagasinage pour le calcul (78) des valeurs d'expansion des espaces et pour la détermination des espaces à agrandir, et en conséquence la justification de ladite ligne de texte.

2. Méthode selon la revendication 1 caractérisée en ce qu'elle comprend en outre les étapes suivantes:

(k) L'établissement d'un index à utiliser comme un pointeur pour ledit mécanisme d'emmagasinage,

(l) L'incrémentation (54) dudit index par la longueur d'espace de chacun desdits espaces inter-mots déterminés à l'étape (c), et

(m) La décrémentation (64) dudit index par la longueur d'espace de chacun desdits espaces inter-mots déterminés à l'étape (g).

3. Méthode selon la revendication 1 ou 2 caractérisée en ce que lesdits espaces inter-mots sont codés pour l'emmagasinage afin de permettre l'apparition de longueurs variables dans lesdites données, ce qui fait que des variations du pas des caractères apparaissant dans une ligne de données à imprimer peuvent être mises au format de manière appropriée pour la justification.

4. Méthode selon les revendications 1, 2 ou 3 caractérisée en ce que:

Ledit mécanisme d'emmagasinage (40) est une mémoire à accès aléatoire présentant chaque bit da chaque multiplet en correspondance avec une unité d'échappement le long de la ligne d'impression, le bit inférieur du multiplet N + 1 étant un bit d'ordre plus élevé par comparaison avec le bit le plus élevé du multiplet N, et

Lesdits espaces inter-mots sont codés dans ladite mémoire comme une séquence de bits consécutifs en ordre bits/multiplets ascendant.

FIG. 1

HOST SYSTEM ~16

18

CABLE TO HOST

DATA MEMORY ~26

PROGRAM MEMORY ~24

LINK INTERFACE LOGIC ~22

30

INTERNAL ADDRESS BUS

32

INTERNAL DATA BUS

INTERRUPT LINE

I/O PORT ~28

INTERRUPT LINE

PROCESSOR ~20

FORMATTING UNIT

~12

I/O BUS

PRINTER MECHANISM

14

~10

# FIG. 2

40

BIT NUMBER

| | 7 | 6 | 5 | 4 | 3 | 2 | 1 | 0 |
|---|---|---|---|---|---|---|---|---|
| 0 | 7 | 6 | 5 | 4 | 3 | 2 | 1 | 0 |
| 1 | 15 | 14 | 13 | 12 | 11 | 10 | 9 | 8 |
| 2 | 23 | 22 | 21 | 20 | 19 | 18 | 17 | 16 |
| 3 | 31 | 30 | 29 | 28 | 27 | 26 | 25 | 24 |
| 4 | 39 | 38 | 37 | 36 | 35 | 34 | 33 | 32 |
| 5 | 47 | 46 | 45 | 44 | 43 | 42 | 41 | 40 |
| 6 | 55 | 54 | 53 | 52 | 51 | 50 | 49 | 48 |
| 7 | 63 | 62 | 61 | 60 | 59 | 58 | 57 | 56 |
| 8 | 71 | 70 | 69 | 68 | 67 | 66 | 65 | 64 |
| 9 | 79 | 78 | 77 | 76 | 75 | 74 | 73 | 72 |
| 10 | 87 | 86 | 85 | 84 | 83 | 82 | 81 | 80 |
| 141 | 1135 | 1134 | 1133 | 1132 | 1131 | 1130 | 1129 | 1128 |
| 142 | 1143 | 1142 | 1141 | 1140 | 1139 | 1138 | 1137 | 1136 |

BYTE NUMBER

ESCAPEMENT UNITS FROM
LEFT EDGE

2

FIG. 3

0 077 891

3